# EUROPEAN PATENT SPECIFICATION

(11) **EP 1 818 219 B1**
(45) Date of publication and mention of the grant of the patent: **29.06.2011**
(21) Application number: 07102039.0
(22) Date of filing: 09.02.2007
(51) Int. Cl.: B60R 9/10

(54) **Lifting device for a bicycle carrier**
Hebevorrichtung für einen Fahrzeugträger
Appareil de levage pour porte-vélo

(30) Priority: 10.02.2006 NL 1031124
(43) Date of publication of application: 15.08.2007
(73) Proprietor: Doge Collection, 5061 JR Oisterwijk (NL)
(72) Inventor: Jansen, Reindert Jan, 3742 AT, Baarn (NL)
(74) Representative: Van Breda, Jacobus

(56) References cited:
- DE-A1- 19 608 334
- FR-A- 2 689 468
- US-A- 5 011 361
- US-A- 5 431 522
- US-A- 5 816 763
- US-A1- 2002 005 422

## Description

The invention relates to a lifting device for carriers such as bicycle carriers to be fastened to a vehicle, wherein the lifting device is provided with a first column, and a second column, which in a longitudinal direction is movably connected with the first column, and with moving-means for moving the first column and the second column in relation to each other. De invention also relates to a bicycle carrier and to a vehicle provided with such a lifting device.

It should be noted that when referring in this application to a bicycle carrier, this also refers to other carriers that can be fastened to a vehicle. The invention is therefore equally applicable to other carriers, such as carriers for mopeds, scooters, wheelchairs, transport cases and the like.

There are lifting devices known for mounting behind vehicles. These lifting devices are usually permanently fastened to the vehicle and serve, for example, for loading and unloading goods from a lorry.

Also known are carriers for motorcycles, scooters and the like, provided with a lifting device. Sometimes these carriers with lifting device are removably fastened to a vehicle. However, to fasten the known carriers with lifting device to and/or detach the carrier form the vehicle, requires some know-how and should be performed by a skilled person with the aid of tools.

The generic American Patent Application US 5.011.361 discloses a carrier for scooters for disabled persons, which carrier is to be fastened to a motor vehicle. The carrier is provided with a mast with power lift, moving a platform between a lowered and a raised position. This carrier is heavy and is fastened to the chassis of a vehicle.

The German Patent Application DE 196 08 334 relates to an extra load carrier for motor vehicles, for the transport of loads, in particular of motorcycles, comprising a carrier frame that can be raised and lowered and that is fastened to the chassis of the vehicle by means of two adapters. Fastening this carrier requires know-how and needs to be carried out by a skilled person.

The American Patent nr. US 5,431,522 discloses a scooter holder that has a scooter platform that can be folded when no scooter is atop the platform. The scooter holder is attached to the trailer hitch of a vehicle by a post that is telescopically received by the hitch and locked by a bolt.

In the references, US 5.011.361, DE 196 08 334, and US 5,431,522 a carrier is fastened to the vehicle using fasteners that require tooling and mounting skill.

European Patent Nr. EP 0 710 588 B1 discloses an apparatus for securing a load carrier, such as a bicycle bracket or the like, to the ball hitch of a vehicle.

It is therefore an object of the present invention to provide a lifting device for bicycle carriers to be fastened to a car, and which can be fastened to a car and removed therefrom by an ordinary driver of a car, and which allows a bicycle carrier to be mounted to a car, and bicycles to be fastened to the bicycle carrier without much effort in a simple and effective manner, where by the device is suitable for bicycle carriers intended for coupling to a ball hitch.

This object is achieved with a lifting device according to claim 1, wherein the lifting device is provided with a first column and a second column, which in a longitudinal direction is movably connected with the first column, and with moving means for moving the first column and the second column in relation to each other, (wherein the lifting device is provided with a stop mechanism, for fixing a mutual position of the first column and the second column), wherein the first column near the lower end is provided with a first coupling piece for removably coupling the carrier to the first column, and the second column is provided with a second coupling piece for removably coupling the lifting device to a ball hitch of the vehicle. It is possible to mount a bicycle carrier to such a lifting device beforehand. This is mounted with the aid of a first coupling piece located close to the ground so that the bicycle carrier does not, or only slightly, need to be lifted. During mounting, this same may rest completely or partly on the ground so that mounting can take place without much effort. During use, the lifting device may then be taken to the vehicle with the bicycle carrier mounted thereon. The lifting device then rests on the ground near the ball hitch of the vehicle. With the aid of the moving means, the second column with the second coupling piece is moved upward and manoeuvred above the ball hitch. As the lifting device rests on the ground, this manoeuvre is relatively easy and requires no effort. With the aid of the moving means, the second column with the second coupling piece is subsequently moved downwards, over the ball hitch and fixed thereto in the usual manner. Instead of mounting the lifting device with the bicycle carrier it is also possible to first mount the lifting device in the manner described above, and then mount the bicycle carrier to the lifting device, also in the manner described above.

After that, the bicycle or bicycles are mounted to the bicycle carrier. As the bicycle carrier is still on or near the ground, this mounting is similarly simple and requires no effort and there is no need to manoeuvre a bicycle at a considerable height. With the aid of the moving means, the first column with the bicycle carrier and the bicycle(s) thereon is now moved upward in relations to the second column, which is presently fixed to the vehicle by means of the second coupling. After the bicycle carrier with the bicycle(s) has reached sufficient height the mutual position of the columns is detented. The detent may be embodied in any known manner. The assembly is now ready for transport without having to carry out any cumbersome manoeuvres with a bicycle carrier and with bicycles at an awkward height. Unloading takes place in reverse order. Of course, some of the actions may be carried out manually without making use of the advantages of the lifting device; for example, the lifting device may be fastened to the ball hitch and the bicycle carrier to the lifting device at a low position. Subsequently, the bicycles are placed on the bicycle carrier and then the bicycle carrier with the bicycles are lifted to the correct height with the aid of the lifting device.

It is especially advantageous if the moving means comprise an electromotor and are connectable to a power supply of the car, seeing as the socket outlet of the car is in the immediate vicinity of the ball hitch. In a simple embodiment, the moving means are provided with a manual control. However, it is also advantageous that an embodiment of the invention wherein the moving means are provided with an electromotor also comprises moving means that can be operated manually. This may be used in case of power failure. In a preferred embodiment, the manual control is a crank.

Examples of means that are suitable to generate a reciprocal movement as required in the moving means include a pneumatic cylinder, a hydraulic cylinder, a threaded spindle, a ball circulating screw, a rack, a chain, a drive belt, a steel cable, a combination of these.

To facilitate transport of the lifting device from and to the vehicle, it is advantageous for the column to be provided at a lower side with at least one wheel. In this way the lifting device does not need to be carried, but may be wheeled. It is also possible to embody the carrier with wheels.

Fastening a platform at the lower side of the column provided with at least three wheels renders the transport on wheels very stable. Such a platform may also be fastened to the carrier.

Such a platform only serves for the transport to and from the car. Advantageously the platform is removable, especially if a relatively large platform is used. A lifting device according to the invention provided with wheels may, for example, be coupled to a bicycle carrier in a garage where it is immediately loaded with bicycles and after which the assembly of lifting device, bicycle carrier and bicycles is wheeled to the vehicle to be mounted in the manner described above.

Many bicycle carriers are provided with lighting that is connected to the socket outlet of the car at the ball hitch. The lifting device of such bicycle carriers is advantageously provided with an electrical point for connecting both to the vehicle and to the bicycle carrier. This allows the plug of the bicycle carrier to be connected via the lifting device instead of leading a long flex around the same.

The invention also applies to bicycle carriers that are embodied integrally with a lifting device according to the invention, as well as to vehicles embodied with a lifting device according to the invention.

Hereinafter the invention will be further explained by way of non-limiting exemplary embodiments of the invention and with reference to the drawing, in which:
Fig. 1 shows a perspective view of a bicycle carrier, lifting device according to the invention, and rear side of a car.
Fig. 2 shows the lifting device of Fig. 1 in more detail, and
Fig. 3 shows the lifting device of Figs. 1 and 2 on a mobile undercarriage.

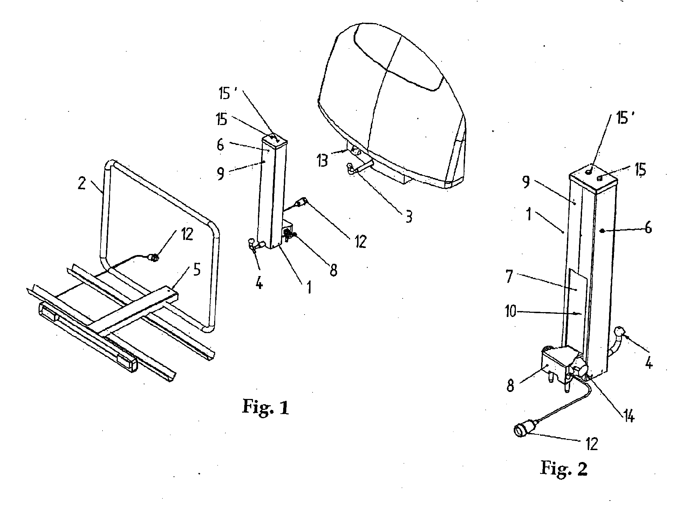

Fig. 1 shows a lifting device 1 for a bicycle carrier 2 and the rear side of a car. Lifting device 1 en bicycle carrier 2 are to be fastened to the ball hitch 3 at the rear side of a car (not further illustrated). The usual stabilisation-device at the ball hitch 3 that serves for the horizontal stabilisation of the lifting device 1 and the bicycle carrier 2, is also not shown. Fig. 2 shows the lifting device 1 in more detail. The lifting device comprises a first column 6, permanently connected to which is a ball hitch 4. The bicycle carrier 2 is provided with a coupling mechanism 5 with which the bicycle carrier can be fastened to the ball hitch 4 of the lifting device. Within column 6 a second column 7 is provided that is slidable in the direction of the longitudinal axis of column 6. Column 7 is provided with a projecting coupling mechanism 8 for coupling the lifting device 1 to the ball hitch 3 of the car. Ball hitch 3 of the car and towing 4 hook of the lifting device 1 are similar ball hitches. The coupling mechanism 5 of the bicycle carrier 2 and the coupling mechanism 8 of the lifting device 1 are also similar coupling mechanisms. These are standard and are available in the market and will not be described in further detail. The coupling mechanism 8 and the ball hitch 4 are located at opposite sides of the lifting device 1. The actuator 10 is permanently fixed to column 7. By means of the actuator 10 the rod 9 is movable in its longitudinal direction. The free end of rod 9 is fastened to column 6, at the inside of the upper surface of column 6. As power source, the actuator 10 comprises an electromotor that is powered from the power supply of the car and is connected thereto by means of a plug 12 of the lifting device and the socket outlet 13 of the car. The plug 12 is also connected with socket outlet 14 of the lifting device. The socket outlet 14 belongs to the ball hitch 4 of the lifting device and serves, for example, for connecting the lighting (not shown) of the bicycle carrier 2. The actuator 10 is further provided with a detent that fixes the position of the rod 9 when the same is not being moved by the actuator. The actuator 10 is connected with control switches 15 and 15', mounted to the outside of lid 11 of column 7. The control switch 15 serves for moving column 7 upward in relation to column 6. The control switch 15' serves for moving column 7 downward in relation to column 6. When none of the two switches is operated, the mutual position of column 7 and column 6 is fixed by a detent. This detent may be embodied in numerous different ways that are not new in themselves. With most of the threaded spindles and ball circulating screws, for example, a separate detent is not required. When the spill of the ball circulating screw is not rotated, the detent function is fulfilled by the internal friction and thus the detent is inherently provided in the spindle. At the lower side of column 6, finally, swivel casters (not shown) are mounted.

The lifting device is used as follows. If this has not been done already, the bicycle carrier 2 is first fastened to the lifting device 1 by coupling the coupling mechanism 5 to the ball hitch 4 of the lifting device 1. The ball hitch 4 is fastened to the column 6 in such a manner that when the lifting device is standing on the ground, the bicycle carrier 2 is positioned on or just above the ground. It is now very easy to place one or several bicycles on the bicycle carrier 2. They may be directly wheeled on and require no or hardly any lifting and manoeuvring. Once the bicycles are placed and secured on the bicycle carrier 2 this assembly of lifting device 1, bicycle carrier 2, and the bicycles is wheeled to the car, making use of the swivel casters. At the car, the plug 12 is plugged into the socket outlet 13 to supply actuator 10 with electricity. With the aid of switch 15 the column 7 is moved upwards until the coupling mechanism 8 is located just above the level of the ball hitch 3. With the aid of the swivel casters 16 the assembly is then moved in the horizontal direction until the coupling mechanism 8 is positioned directly above the ball hitch 3. By operating the switch 15', column 7 is moved downward in relation to column 6 until the mechanism 8 is coupled with the ball hitch 3 is realised. By holding the switch 15', the column 6 with the bicycle carrier 2 fastened thereto is lifted off the ground. When there is sufficient space between the ground and column 6 and bicycle carrier 2, the switch 15' is released and the current position is maintained. The lifting device 1 is in addition equipped with an extra safeguard in the form of an extra mechanical lock to maintain the mutual position of column 6 and column 7. The lifting device 1 with the bicycle carrier 2 are now securely fastened to the car without any effort.

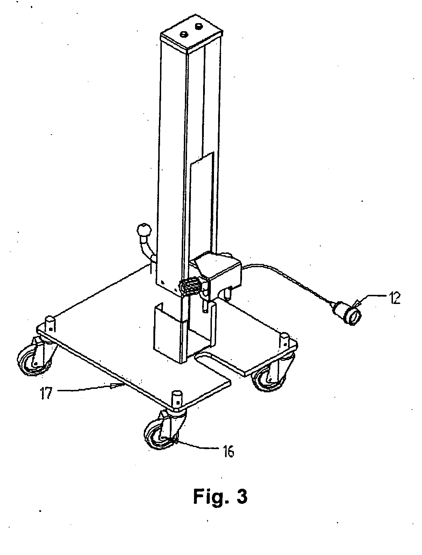

Fig. 3 shows another embodiment of a lifting device according to the invention. By means of a snap fastening, column 6 is connected with a platform 17, under which 4 swivel casters 16 are provided. As platform 17 has a larger dimension than the bottom side of column 6, the swivel casters 16 may be placed further apart from each other than in the embodiment of Fig. 1. This facilitates wheeling. When the assembly of lifting device 1, bicycle carrier 2 and platform 17 are fastened to the car, the snap fastening between column 6 and the platform 17 is released and the latter stowed away.

Of course, it is also possible to provide a lifting device according to the invention with a platform 17 that is permanently fixed to column 6. In addition, the above-described exemplary embodiments may be modified and altered in numerous ways without departing from the scope of the invention as laid down in the appended claims.

## Claims

1. A lifting device (1) for a carrier such as a bicycle carrier (2) to be fastened to a vehicle, wherein the lifting device is provided with a first column, and a second column, which in a longitudinal direction is movably connected with the first column (6), and with moving means (9,10) for moving the first column (6) and the second column (7) in relation to each other, wherein the lifting device (1) is provided with a detent, for fixing a mutual position of the first column (6) and the second column (7), wherein the first column (6) near the lower end is provided with a first coupling piece (4) for removably coupling the carrier (2) to the first column (6), and the second column (7) is provided with a second coupling piece (8) for removably coupling the lifting device (1) to a ball hitch (3) of the vehicle, **characterised in that** the first coupling piece (4) is provided with a ball hitch.

2. A lifting device (1) according to claim 1, **characterised in that** the moving means (9,10) comprise an electromotor.

3. A lifting device (1) according to claim 2, **characterised in that** the moving means (9,10) are connectable to a power supply (13) of the car.

4. A lifting device (1) according to one of the claims 1 to 3, **characterised in that** the moving means (9,10) are comprised of one of the group consisting of a pneumatic cylinder, a hydraulic cylinder, a threaded spindle, a ball circulating screw, a rack, a chain, a drive belt, a steel cable, a combination of these.

5. A lifting device according to one of the claims 1 to 4, **characterised in that** the moving means (9,10) are provided with a manual control.

6. A lifting device according to claim 5, **characterised in that** the manual control is a crank.

7. A lifting device (1) according to one of the claims 1 to 6, **characterised in that** the column (6) is provided at a lower side with at least one wheel (16).

8. A lifting device (1) according to one of the claims 1 to 7, **characterised in that** a platform (17) is fastened to the lower side of the column (6), which is provided with at least three wheels (16).

9. A lifting device (1) according to claim 8, **characterised in that** the platform (17) is removable.

10. A lifting device (1) according to one of the claims 1 to 9, **characterised in that** the lifting device (1) is provided with a power connection (12,14) to be connected both to the vehicle and to the bicycle carrier (14).

## Patentansprüche

1. Eine Hebevorrichtung (1) für einen an einem Fahrzeug zu befestigenden Träger, zum Beispiel einen Fahrradträger (2), wobei die Hebevorrichtung versehen ist mit einer ersten Säule und einer zweiten Säule, die in einer Längsrichtung bewegbar mit der ersten Säule (6) verbunden ist, und mit Bewegungsmitteln (9, 10), um die erste Säule (6) und die zweite Säule (7) bezüglich einander zu bewegen, wobei die Hebevorrichtung (1) mit einer Verriegelung versehen ist, um eine gegenseitige Position der ersten Säule (6) und der zweiten Säule (7) zu fixieren, wobei die erste Säule (6) in der Nähe des unteren Endes mit einem ersten Kupplungsstück (4) versehen ist, um den Träger (2) lösbar mit der ersten Säule (6) zu kuppeln, und die zweite Säule (7) mit einem zweiten Kupplungsstück (8) versehen ist, um die Hebevorrichtung (1) mit einem Kugelkopf (3) des Fahrzeugs zu kuppeln, **dadurch gekennzeichnet, dass** das erste Kupplungsstück (4) mit einem Kugelkopf versehen ist.

2. Eine Hebevorrichtung (1) gemäß Anspruch 1, **dadurch gekennzeichnet, dass** die Bewegungsmittel (9, 10) einen Elektromotor aufweisen.

3. Eine Hebevorrichtung (1) gemäß Anspruch 2, **dadurch gekennzeichnet, dass** die Bewegungsmittel (9, 10) an eine Stromversorgung (13) des Fahrzeugs anschließbar sind.

4. Eine Hebevorrichtung (1) gemäß einem der Ansprüche 1 bis 3, **dadurch gekennzeichnet, dass** die Bewegungsmittel (9, 10) zusammengesetzt sind aus einem aus der Gruppe bestehend aus einem Druckluftzylinder, einem
Hydraulikzylinder, einer Gewindespindel, einer Kugelumlaufspindel, einer Zahnstange, einer Kette, einem Antriebsriemen, einem Stahlseil, einer Kombination aus diesen.

5. Eine Hebevorrichtung gemäß einem der Ansprüche 1 bis 4, **dadurch gekennzeichnet, dass** die Bewegungsmittel (9, 10) mit einer Handsteuerung versehen sind.

6. Eine Hebevorrichtung gemäß Anspruch 5, **dadurch gekennzeichnet, dass** die Handsteuerung eine Kurbel ist.

7. Eine Hebevorrichtung (1) gemäß einem der Ansprüche 1 bis 6, **dadurch gekennzeichnet, dass** die Säule (6) an einer Unterseite mit mindestens einem Rad (16) versehen ist.

8. Eine Hebevorrichtung (1) gemäß einem der Ansprüche 1 bis 7, **dadurch gekennzeichnet, dass** eine Plattform (17) an der Unterseite der Säule (6) befestigt ist, die mit mindestens drei Rädern (16) versehen ist.

9. Eine Hebevorrichtung (1) gemäß Anspruch 8, **dadurch gekennzeichnet, dass** die Plattform (17) abnehmbar ist.

10. Eine Hebevorrichtung (1) gemäß einem der Ansprüche 1 bis 9, **dadurch gekennzeichnet, dass** die Hebevorrichtung (1) mit einem Stromanschluss (12, 14) versehen ist, um sowohl an das Fahrzeug als auch an den Fahrradträger (14) angeschlossen zu werden.

## Revendications

1. Dispositif de levage (1) pour un support tel qu'un porte-vélo (2) destiné à être attaché à un véhicule, dans lequel le dispositif de levage est pourvu d'une première colonne, et d'une seconde colonne qui, dans une direction longitudinale, est reliée de façon amovible à la première colonne (6), et de moyens de déplacement (9, 10) pour déplacer la première colonne (6) et la seconde colonne (7) l'une par rapport à l'autre, dans lequel le dispositif de levage (1) est pourvu d'une détente pour fixer une position mutuelle de la première colonne (6) et de la seconde colonne (7), dans lequel la première colonne (6) près de l'extrémité inférieure est pourvue d'une première pièce de couplage (4) pour coupler de façon amovible le porte-vélo (2) à la première colonne (6), et la seconde colonne (7) est pourvue d'une seconde pièce de couplage (8) pour coupler de façon amovible le dispositif de levage (1) à une boule d'attelage (3) du véhicule, **caractérisé en ce que** la première pièce de couplage (4) est pourvue d'une boule d'attelage.

2. Dispositif de levage (1) selon la revendication 1, **caractérisé en ce que** les moyens de déplacement (9, 10) comprennent un moteur électrique.

3. Dispositif de levage (1) selon la revendication 2, **caractérisé en ce que** les moyens de déplacement (9, 10) peuvent être connectés à une alimentation électrique (13) de la voiture.

4. Dispositif de levage (1) selon l'une des revendications 1 à 3, **caractérisé en ce que** les moyens de déplacement (9, 10) sont compris dans un groupe comprenant un vérin pneumatique, un vérin hydraulique, un arbre fileté, un ensemble vis et écrou à billes circulantes, une crémaillère, une chaîne, une courroie de transmission, un câble d'acier ou une combinaison de ceux-ci.

5. Dispositif de levage (1) selon l'une des revendications 1 à 4, **caractérisé en ce que** les moyens de déplacement (9, 10) sont pourvus d'une commande manuelle.

6. Dispositif de levage (1) selon la revendication 5, **caractérisé en ce que** la commande manuelle est une manivelle.

7. Dispositif de levage (1) selon l'une des revendications 1 à 6, **caractérisé en ce que** la colonne (6) est pourvue à son extrémité inférieure d'au moins une roue (16).

8. Dispositif de levage (1) selon l'une des revendications 1 à 7, **caractérisé en ce qu'**une plate-forme (17) est fixée au côté inférieur de la colonne (6), laquelle est pourvue d'au moins trois roues (16).

9. Dispositif de levage (1) selon la revendication 8, **caractérisé en ce que** la plate-forme (17) est amovible.

10. Dispositif de levage (1) selon l'une des revendications 1 à 9, **caractérisé en ce que** le dispositif de levage (1) est pourvu d'une connexion électrique (12, 14) pour être connecté à la fois au véhicule et au porte-vélo (2).
